# EUROPEAN PATENT APPLICATION

(11) **EP 4 815 141 A1**
(43) Date of publication of application: **30.09.2026**
(21) Application number: 23959281.9
(22) Date of filing: 24.11.2023
(51) Int. Cl.: H01M 50/242, H01M 50/244, H01M 50/204

(54) **BATTERY PACK AND ELECTRICAL DEVICE**

(71) Applicant: Xiamen Ampack Technology Limited, Xiamen City, Fujian Province, 361000 (CN)
(72) Inventor: LI, Kunlong, Xiamen, Fujian 361000 (CN); NONG, Wenbin, Xiamen, Fujian 361000 (CN); WANG, Pengfei, Xiamen, Fujian 361000 (CN); LI, Mei, Xiamen, Fujian 361000 (CN)
(74) Representative: Kraus & Lederer PartGmbB
(86) International application number: PCT/CN2023/134097
(87) International publication number: WO 2025/107312

(57) **Abstract**

A battery module (100) and an electric device (200) are provided. The battery module (100) includes a cell assembly (20), a housing (10a), a front cover (10b), and an elastic member (30). The cell assembly (20) is disposed in the housing (10a). The front cover (10b) is connected to the housing (10a). The elastic member (30) and the cell assembly (20) are arranged along a first direction (X). Along the first direction (X), one side of the elastic member (30) is connected to the housing (10a), and another side of the elastic member (30) is connected to the cell assembly (20). The housing (10a) includes a top wall (11) and a bottom wall (12) arranged along a second direction (Y). The top wall (11) is provided with a first extension portion (111). The first extension portion (111) includes a first extension connection portion (112) connected to the front cover (10b). The bottom wall (12) is provided with a second extension portion (121). The second extension portion (121) includes a second extension connection portion (122) connected to the front cover (10b). Along the first direction (X), a length (D2) of the second extension connection portion (122) is less than a length (D1) of the first extension connection portion (112). The first direction (X) is perpendicular to the second direction (Y). Since the length (D2) of the second extension connection portion (122) is less than the length (D1) of the first extension connection portion (112), the bottom wall (12) is more easily pushed open by the elastic member (30). This is conducive to buffering pressure of the cell assembly (20), reducing the risk of pressure explosion of the cell assembly (20), and improving the safety of the battery module (100).

## Description

### TECHNICAL FIELD

This application relates to the field of energy storage technology, and in particular, to a battery module and an electric device.

### BACKGROUND

Currently, battery modules are widely used in fields such as drones, electric vehicles, and intelligent energy storage devices. During use, battery modules may swell, and the battery modules need to release pressure.

### SUMMARY

In view of this, it is necessary to provide a battery module and an electric device, which facilitates pressure release of a cell module and improves the safety.

An embodiment of this application provides a battery module including a cell assembly, a housing, a front cover, and an elastic member, where the cell assembly is disposed in the housing; the front cover is connected to the housing; the elastic member and the cell assembly are arranged along a first direction; along the first direction, one side of the elastic member is connected to the housing, and another side of the elastic member is connected to the cell assembly; the housing includes a top wall and a bottom wall arranged along a second direction; the top wall is provided with a first extension portion; the first extension portion includes a first extension connection portion connected to the front cover; the bottom wall is provided with a second extension portion; the second extension portion includes a second extension connection portion connected to the front cover; along the first direction, a length of the second extension connection portion is less than a length of the first extension connection portion; and the first direction is perpendicular to the second direction. When the cell assembly swells, a swelling force acts on the elastic member, and the elastic member applies the swelling force to the housing. Over time, as the cell assembly continues to swell, after the elastic member is compressed to its limit, since the length of the second extension connection portion is less than the length of the first extension connection portion, this helps the bottom wall to be more easily pushed open by the elastic member, buffers the pressure of the cell assembly, reduces the risk of pressure explosion of the cell assembly, and improves the safety of the battery module.

In the above one or more optional implementations, the first extension portion is fixedly connected to the front cover, helping the elastic member to push open the bottom wall.

In the above one or more optional implementations, a circuit board is further included, where the circuit board is disposed on the front cover; a side of the circuit board is provided with a first component, the side of the circuit board being a side facing the elastic member; and along the second direction, a distance from the first component to the top wall is L1, and a distance from the first component to the bottom wall is L2, where L1 is less than L2. Disposing the first component closer to the top wall the risk of damage to the first component caused when the elastic member pushes open the bottom wall and the cell assembly rushes out of the bottom wall.

In the above one or more optional implementations, along the second direction, a distance between the bottom wall and the top wall is L0, and L1 is less than 1/4L0, further reducing the risk of the cell assembly coming into contact with the first component and causing damage to the first component.

In the above one or more optional implementations, along the first direction, the first component protrudes from the circuit board relative to other components.

In the above one or more optional implementations, the first extension portion includes a first bent portion, where the first bent portion is connected to the first extension connection portion, and the elastic member abuts against the first bent portion. This is conducive to improving the connection strength between the elastic member and the housing.

In the above one or more optional implementations, the second extension portion includes a second bent portion, where the second bent portion is connected to the second extension connection portion; and the elastic member abuts against the second bent portion. This is conducive to improving the connection strength between the elastic member and the housing.

In the above one or more optional implementations, the elastic member includes a base portion, a buffer portion, and a connection portion, where the base portion is connected to the cell assembly; the buffer portion is connected to the connection portion and the base portion; and the connection portion is fixed to the housing.

In the above one or more optional implementations, the buffer portion includes a first buffer portion, and the first buffer portion is connected to one side of the base portion.

In the above one or more optional implementations, the buffer portion includes a first buffer portion and a second buffer portion, where along the second direction, the first buffer portion and the second buffer portion are disposed opposite to each other; the first buffer portion is connected to one side of the base portion; and the second buffer portion is connected to another side of the base portion.

In the above one or more optional implementations, the connection portion includes a first connection portion; and the elastic member includes a third bent portion, and the third bent portion abuts against the first bent portion. This is conducive to improving the connection strength between the elastic member and the housing.

In the above one or more optional implementations, the connection portion includes a second connection portion, and the first connection portion and the second connection portion are disposed opposite to each other along the second direction; and the elastic member includes a fourth bent portion, and the fourth bent portion abuts against the second bent portion. This is conducive to improving the connection strength between the elastic member and the housing.

In the above one or more optional implementations, the top wall is provided with a first fixing portion, and the first connection portion is fixed to the first fixing portion; and along the first direction, a projection of the first fixing portion overlaps with a projection of the first connection portion.

In the above one or more optional implementations, the bottom wall is provided with a second fixing portion, and the second connection portion is fixed to the second fixing portion; and along the first direction, a projection of the second fixing portion overlaps with a projection of the second connection portion.

In the above one or more optional implementations, the housing includes a first side wall and a second side wall, the first side wall and the second side wall are arranged along a third direction, the first side wall is fixedly connected to the front cover, the second side wall is fixedly connected to the front cover, the first side wall is provided with a third fixing portion, and the first connection portion and the second connection portion are fixed to the third fixing portion, facilitating uniform stress and uniform deformation of the elastic member; and/or the second side wall is provided with a fourth fixing portion, and the first connection portion and the second connection portion are fixed to the fourth fixing portion, facilitating uniform stress and uniform deformation of the elastic member.

In the above one or more optional implementations, the first extension portion and the second extension portion are disposed in the front cover, which facilitates the connection between the front cover and the housing.

In the above one or more optional implementations, the housing includes a rear wall, where the rear wall is connected to the top wall and the bottom wall; along the first direction, the cell assembly is disposed between the elastic member and the rear wall; and a stiffness of the elastic member is less than a stiffness of the rear wall. When the cell assembly swells, the elastic member deforms before the rear wall, and the elastic member provides a swelling space for the cell assembly.

In the above one or more optional implementations, the cell assembly includes a cell unit, where the cell unit includes a cell, the cell includes a cell housing, an electrode assembly, and an electrode terminal, the cell housing includes a body portion, the electrode assembly is disposed in the body portion, and the electrode terminal is connected to the electrode assembly and led out from the cell housing; and the top wall is provided with two first limiting portions, the two first limiting portions are arranged along the third direction, and the body portion of each cell unit is disposed between the two first limiting portions. The movement of the cell assembly is guided by the two first limiting portions.

In the above one or more optional implementations, the bottom wall is provided with two second limiting portions, the two second limiting portions are arranged along the third direction, and the body portion of each cell unit is disposed between the two second limiting portions. The movement of the cell assembly is guided by the two second limiting portions.

In the above one or more optional implementations, the first component includes a fuse apparatus.

In the above one or more optional implementations, the second extension portion is directly connected to an inner surface of the front cover, helping the bottom wall to be more easily pushed open by the elastic member.

In the above one or more optional implementations, the strength of the top wall is greater than the strength of the bottom wall, helping the cell assembly to rush out from a side where the bottom wall is located, and helping to further improve the safety of the battery module.

In the above one or more optional implementations, the battery module includes a first buffer member, where the first buffer member is disposed between the base portion and the first cell unit; and the hardness of the first buffer member is less than the hardness of the base portion. This reduces the damage to the first cell unit by the base portion.

In the above one or more optional implementations, the battery module includes a second buffer member, where the second buffer member is disposed between the second cell unit and the rear wall; and the hardness of the second buffer member is less than the hardness of the rear wall. This reduces the damage to the second cell unit by the rear wall.

In the above one or more optional implementations, the battery module includes a first conductive member; along the second direction, a first gap is provided between the base portion and the housing; and one end of the first conductive member is connected to the cell assembly, and another end passes through the first gap.

In the above one or more optional implementations, the first conductive member is configured to move with the elastic member, which can reduce the pulling on the first conductive member, reduce the risk of the first conductive member being pulled apart, and improve the safety of the battery module.

In the above one or more optional implementations, the battery module includes a second conductive member; a second gap is provided between the base portion and the housing; and one end of the second conductive member is connected to the cell assembly, and another end passes through the second gap.

In the above one or more optional implementations, the second conductive member and the elastic member are separately disposed, which is conducive to reducing the pulling on the second conductive member, reducing the risk of the second conductive member being pulled apart, and improving the safety of the battery module.

In the above one or more optional implementations, the connection portion is provided with a flange, where the flange is formed by folding a side of the connection portion facing away from the buffer portion in the second direction; and along the first direction, the flange is disposed between the connection portion and the base portion. The flange can reduce the risk of the connection portion cutting a wire harness.

In the above one or more optional implementations, along the first direction, a projection of the flange does not overlap with a projection of the buffer portion, reducing the influence on a deformation region of the buffer portion.

An embodiment of this application provides a battery module including a cell assembly, a housing, a front cover, and an elastic member, where the cell assembly is disposed in the housing; the front cover is connected to the housing; the elastic member and the cell assembly are arranged along a first direction; along the first direction, one side of the elastic member is connected to the housing, and another side is of the elastic member connected to the cell assembly; the housing includes a top wall and a bottom wall arranged along a second direction; the top wall is provided with a first extension portion; the first extension portion includes a first extension connection portion connected to the front cover; the bottom wall is provided with a second extension portion; the second extension portion includes a second extension connection portion connected to the front cover; and the stiffness of the first extension portion is greater than the stiffness of the second extension portion. When the cell assembly swells, a swelling force acts on the elastic member, and the elastic member applies the swelling force to the housing. Over time, as the cell assembly continues to swell, after the elastic member is compressed to its limit, since the stiffness of the first extension portion is greater than the stiffness of the second extension portion, this helps the bottom wall to be more easily pushed open by the elastic member, buffers the pressure of the cell assembly, reduces the risk of pressure explosion of the cell assembly, and improves the safety of the battery module.

In the above one or more optional implementations, the first extension portion is fixedly connected to the front cover, helping the elastic member to push open the bottom wall.

In the above one or more optional implementations, a circuit board is further included, where the circuit board is disposed on the front cover; a side of the circuit board is provided with a first component, the side of the circuit board being a side facing the elastic member; and along the second direction, a distance from the first component to the top wall is L1, a distance from the first component to the bottom wall is L2, where L1 is less than L2. Disposing the first component closer to the top wall reduces the risk of damage to the first component caused when the elastic member pushes open the bottom wall and the cell assembly rushes out of the bottom wall.

In the above one or more optional implementations, along the second direction, a distance between the bottom wall and the top wall is L0, and L1 is less than 1/4L0, further reducing the risk of the cell assembly coming into contact with the first component and causing damage to the first component.

In the above one or more optional implementations, along the first direction, the first component protrudes from the circuit board relative to other components.

In the above one or more optional implementations, the housing includes a first bent portion, where the first bent portion is connected to the first extension portion, and the elastic member abuts against the first bent portion. This is conducive to improving the connection strength between the elastic member and the housing.

In the above one or more optional implementations, the housing includes a second bent portion, where the second bent portion is connected to the second extension portion; and the elastic member abuts against the second bent portion. This is conducive to improving the connection strength between the elastic member and the housing.

In the above one or more optional implementations, the elastic member includes a base portion, a buffer portion, and a connection portion, where the base portion is connected to the cell assembly; the buffer portion is connected to the connection portion and the base portion; and the connection portion is fixed to the housing.

In the above one or more optional implementations, the buffer portion includes a first buffer portion, and the first buffer portion is connected to one side of the base portion.

In the above one or more optional implementations, the buffer portion includes a first buffer portion and a second buffer portion, where along the second direction, the first buffer portion and the second buffer portion are disposed opposite to each other; the first buffer portion is connected to one side of the base portion; and the second buffer portion is connected to another side of the base portion.

In the above one or more optional implementations, the connection portion includes a first connection portion; and the elastic member includes a third bent portion, and the third bent portion abuts against the first bent portion. This is conducive to improving the connection strength between the elastic member and the housing.

In the above one or more optional implementations, the connection portion includes a second connection portion, and the first connection portion and the second connection portion are disposed opposite to each other along the second direction; and the elastic member includes a fourth bent portion, and the fourth bent portion abuts against the second bent portion. This is conducive to improving the connection strength between the elastic member and the housing.

In the above one or more optional implementations, the top wall is provided with a first fixing portion, and the first connection portion is fixed to the first fixing portion; and along the first direction, a projection of the first fixing portion overlaps with a projection of the first connection portion.

In the above one or more optional implementations, the bottom wall is provided with a second fixing portion, and the second connection portion is fixed to the second fixing portion; and along the first direction, a projection of the second fixing portion overlaps with a projection of the second connection portion.

In the above one or more optional implementations, the housing includes a first side wall, where the first side wall is connected to the bottom wall and the top wall; the first side wall is fixedly connected to the front cover; the first side wall is provided with a third fixing portion; and the first connection portion and the second connection portion are fixed to the third fixing portion. This facilitates uniform stress and uniform deformation of the elastic member.

In the above one or more optional implementations, the housing includes a second side wall, where the second side wall is fixedly connected to the front cover; the second side wall is connected to the top wall and the bottom wall; the second side wall is provided with a fourth fixing portion; and the first connection portion and the second connection portion are fixed to the fourth fixing portion. This facilitates uniform stress and uniform deformation of the elastic member.

In the above one or more optional implementations, the first extension portion and the second extension portion are disposed in the front cover, which facilitates the connection between the front cover and the housing.

In the above one or more optional implementations, the housing includes a rear wall, where the rear wall is connected to the top wall and the bottom wall; along the first direction, the cell assembly is disposed between the elastic member and the rear wall; and the stiffness of the elastic member is less than the stiffness of the rear wall. When the cell assembly swells, the elastic member deforms before the rear wall, and the elastic member provides a swelling space for the cell assembly.

In the above one or more optional implementations, the cell assembly includes a cell unit, where the cell unit includes a cell, the cell includes a cell housing, an electrode assembly, and an electrode terminal, the cell housing includes a body portion, the electrode assembly is disposed in the body portion, and the electrode terminal is connected to the electrode assembly and led out from the cell housing; and the top wall is provided with two first limiting portions, the two first limiting portions are arranged along the third direction, and the body portion of each cell unit is disposed between the two first limiting portions. The movement of the cell assembly is guided by the two first limiting portions.

In the above one or more optional implementations, the bottom wall is provided with two second limiting portions, the two second limiting portions are arranged along the third direction, and the body portion of each cell unit is disposed between the two second limiting portions. The movement of the cell assembly is guided by the two second limiting portions.

In the above one or more optional implementations, the first component includes a fuse apparatus.

In the above one or more optional implementations, the strength of the top wall is greater than the strength of the bottom wall, helping the cell assembly to rush out from a side where the bottom wall is located, and helping to further improve the safety of the battery module.

In the above one or more optional implementations, the battery module includes a first buffer member, where the first buffer member is disposed between the base portion and the first cell unit; and the hardness of the first buffer member is less than the hardness of the base portion. This reduces the damage to the first cell unit by the base portion.

In the above one or more optional implementations, the battery module includes a second buffer member, where the second buffer member is disposed between the second cell unit and the rear wall; and the hardness of the second buffer member is less than the hardness of the rear wall. This reduces the damage to the second cell unit by the rear wall.

In the above one or more optional implementations, the battery module includes a first conductive member; along the second direction, a first gap is provided between the base portion and the housing; and one end of the first conductive member is connected to the cell assembly, and another end passes through the first gap.

In the above one or more optional implementations, the first conductive member is configured to move with the elastic member, which can reduce pulling on the first conductive member, reduce the risk of the first conductive member being pulled apart, and improve the safety of the battery module.

In the above one or more optional implementations, the battery module includes a second conductive member; a second gap is provided between the base portion and the housing; and one end of the second conductive member is connected to the cell assembly, and another end passes through the second gap.

In the above one or more optional implementations, the second conductive member and the elastic member are separately disposed, which is conducive to reducing the pulling on the second conductive member, reducing the risk of the second conductive member being pulled apart, and improving the safety of the battery module.

In the above one or more optional implementations, the connection portion is provided with a flange, where the flange is formed by folding a side of the connection portion facing away from the buffer portion in the second direction; and along the first direction, the flange is disposed between the connection portion and the base portion. The flange can reduce the risk of the connection portion cutting a wire harness.

In the above one or more optional implementations, along the first direction, a projection of the flange does not overlap with a projection of the buffer portion, reducing the influence on a deformation region of the buffer portion.

An embodiment of this application provides an electric device including the battery module according to any one of the above embodiments.

### BRIEF DESCRIPTION OF DRAWINGS

FIG. 1 is a schematic structural diagram of a battery module according to some embodiments.
FIG. 2 is an exploded view of a battery module according to some embodiments
FIG. 3 is a schematic diagram of a partial structure of a battery module according to some embodiments
FIG. 4 is a schematic diagram of a partial structure of a battery module according to some embodiments
FIG. 5 is an enlarged view of a partial structure of the battery module in FIG. 4.
FIG. 6 is an enlarged view of a partial structure of the battery module in FIG. 4.
FIG. 7 is a schematic structural diagram of a partial housing and an elastic member according to some embodiments
FIG. 8 is a schematic structural diagram of an elastic member according to some embodiments
FIG. 9 is a schematic structural diagram of a top wall according to some embodiments
FIG. 10 is a schematic structural diagram of a top wall from another perspective according to some embodiments
FIG. 11 is a schematic enlarged view of a partial top wall in FIG. 10.
FIG. 12 is a schematic structural diagram of a partial housing according to some embodiments
FIG. 13 is a schematic structural diagram of a bottom wall according to some embodiments
FIG. 14 is a schematic enlarged view of a partial bottom wall in FIG. 13.
FIG. 15 is a schematic diagram of a partial structure of a battery module according to some embodiments
FIG. 16 is a schematic structural diagram of a front cover and a circuit board according to some embodiments
FIG. 17 is a schematic structural diagram of a circuit board according to some embodiments
FIG. 18 is a schematic structural diagram of a circuit board from another perspective according to some embodiments
FIG. 19 is a schematic structural diagram of a circuit board and a housing according to some embodiments
FIG. 20 is a schematic diagram of a partial structure of a battery module according to some embodiments
FIG. 21 is a schematic structural diagram of a cell according to some embodiments
FIG. 22 is an exploded view of the cell in FIG. 21.
FIG. 23 is a schematic structural diagram of a cell unit according to some embodiments
FIG. 24 is a schematic structural diagram of a cell unit from another perspective according to some embodiments
FIG. 25 is a schematic structural diagram of a cell unit from still another perspective according to some embodiments
FIG. 26 is a schematic structural diagram of a partial cell unit according to some embodiments
FIG. 27 is a schematic structural diagram of a partial cell unit according to some embodiments
FIG. 28 is a schematic structural diagram of a cell unit from still another perspective according to some embodiments
FIG. 29 is a schematic structural diagram of an electric device according to some embodiments

### Description of reference signs of main components:

100.Battery module; 10.Housing;10a.Housing;10b.Front cover;101b.Second hole;11.Top wall; 111.First extension portion;1111.First hole;112.First extension connection portion;113.First bent portion;11a.First fixing portion;11b.First limiting portion;12.Bottom wall;121.Second extension portion;122.Second extension connection portion;123.Second bent portion;12a.Second fixing portion; 12b.Second limiting portion;13.First side wall;131.First fixing member;13a.Third fixing portion; 14.Second side wall;14a.Fourth fixing portion;141.Second fixing member;15.Rear wall;16.Cover body;20.Cell assembly;20a.Cell unit;201.First cell unit;202.Second cell unit;21.Cell;21a.Cell housing;211.Body portion;211c.First wall;211d.Second wall;2111.First housing;2111a.First recess;2112.Second housing;2112a.Second recess;2113.First extension edge;2114.Second extension edge;212.Sealing portion;212a.First sealing portion;2121.First sealing connection portion; 2122.First sealing bent portion;212b.Second sealing portion;21b.Electrode assembly;21c.Electrode terminal;22.Support;22a.First support;22b.Second support;221.First connection portion;222.First side portion;224.First side extension portion;226.Second connection portion;227.Protrusion; 227a.Accommodation groove;228.Notch;30.Elastic member;301.First gap;302.Second gap; 31.Base portion;32.Buffer portion;321.First buffer portion;321a.First segment;321b.Second segment;322.Second buffer portion;322a.Third segment;322b.Fourth segment;33.Connection portion;331.First connection portion;332.Second connection portion;333.Flange;34.Third bent portion;35.Fourth bent portion;40.Circuit board;41.First component;50.First conductive member; 60.Second conductive member;70.Sampling member;101.Fastener;102.First connection end; 103.Second connection end;104.Wire;110.First insulating sheet;120.First buffer member; 130.Second buffer member;200.Electric device;X.First direction;Y.Second direction;Z.Third direction

The following specific embodiments will further illustrate this application in conjunction with the above drawings.

### DETAILED DESCRIPTION

The technical solutions in some embodiments of this application will be described below in conjunction with the drawings in these embodiments of this application. Apparently, the described embodiments are only some but not all of these embodiments of this application.

It should be noted that when one element is assumed as being "connected to" another element, the element may be connected to the another element directly or with an element possibly present therebetween. When one element is assumed as being "disposed on" or "disposed in" another element, the element may be disposed directly on/in the another element or with an element possibly present therebetween.

Unless otherwise defined, all technical and scientific terms used herein have the same meanings as commonly understood by those skilled in the art to which this application belongs. The terms used in the specification of this application are for the purpose of describing specific embodiments only and are not intended to limit this application. The term "and/or" used herein includes any and all combinations of one or more of the associated listed items.

It should be understood that, considering factors of actual processing tolerances, the term "perpendicular" in the technical solutions of this application is used to describe an ideal state between two components. In actual production or use, an approximately perpendicular state may be present between the two components. For example, with reference to the description of numerical values, "perpendicular" may indicate that an included angle between two straight lines is within a range of 90°±10°, "perpendicular" may alternatively indicate that a dihedral angle of two planes is within a range of 90°±10°, and "perpendicular" may further alternatively indicate that an included angle between a straight line and a plane is within a range of 90°±10°. Two components described as "perpendicular" to each other may not be absolutely straight lines or planes, and may be approximately straight lines or planes. From a macro perspective, a component can be considered as a "straight line" or "plane" as long as the overall extension direction is a straight line or a plane.

Unless otherwise defined, all technical and scientific terms used herein have the same meanings as commonly understood by those skilled in the art to which this application belongs. The terms used in the specification of this application are for the purpose of describing specific embodiments only and are not intended to limit this application.

The terms "left", "right", "top", "bottom", "front", "rear", and similar expressions used herein are for illustrative purposes only and are not intended to limit this application.

Unless otherwise defined, the term "a plurality of" used herein when describing the number of components specifically refers to the number of the components being two or more.

In a first direction X includes both the first direction X and a direction opposite to the first direction X. In a second direction Y includes both the second direction Y and a direction opposite to the second direction Y. In a third direction Z includes both the third direction Z and a direction opposite to the third direction Z.

For ease of description, in the drawings, some electrode terminals are not shown in a bent state.

An embodiment of this application provides a battery module including a cell assembly, a housing, a front cover, and an elastic member. The cell assembly is disposed in the housing. The front cover is connected to the housing. The elastic member and the cell assembly are arranged along a first direction. Along the first direction, one side of the elastic member is connected to the housing, and another side the elastic member is connected to the cell assembly. The housing includes a top wall and a bottom wall arranged along a second direction. The top wall is provided with a first extension portion. The first extension portion includes a first extension connection portion connected to the front cover. The bottom wall is provided with a second extension portion. The second extension portion includes a second extension connection portion connected to the front cover. Along the first direction, a length of the second extension connection portion is less than a length of the first extension connection portion. The first direction is perpendicular to the second direction. When the cell assembly swells, a swelling force acts on the elastic member, and the elastic member applies the swelling force to the housing. Over time, as the cell assembly continues to swell, after the elastic member is compressed to its limit, since the length of the second extension connection portion is less than the length of the first extension connection portion, this helps the bottom wall to be more easily pushed open by the elastic member, buffers the pressure of the cell assembly, reduces the risk of pressure explosion of the cell assembly, and improves the safety of the battery module.

The following detailed description of some embodiments of this application is made in conjunction with the drawings. Without conflict, the following embodiments and features in these embodiments can be combined with each other.

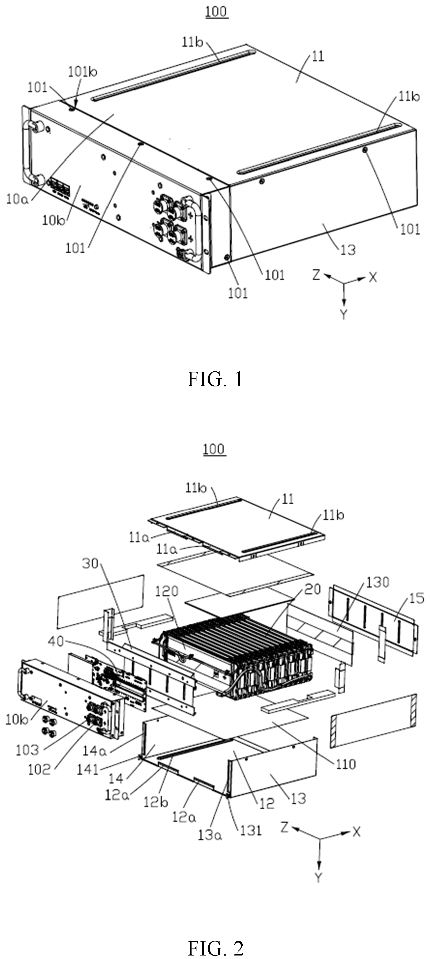

Referring to FIG. 1 and FIG. 2, an embodiment of this application provides a battery module 100 including a housing 10a, a cell assembly 20, and a front cover 10b. The cell assembly 20 is disposed in the housing 10a. The front cover 10b is connected to the housing 10a.

In some embodiments, the battery module 100 includes an elastic member 30. The elastic member 30 is disposed in the housing 10a. The elastic member 30 and the cell assembly 20 are arranged along a first direction X. Along the first direction X, one side of the elastic member 30 is connected to the housing 10a, and another side of the elastic member 30 is connected to the cell assembly 20.

In some embodiments, the elastic member 30 is disposed in the housing 10a, which facilitates disassembly and maintenance of the battery module 100.

In some embodiments, the elastic member 30 is configured to apply pressure to the cell assembly 20 and provide a swelling space for the cell assembly 20.

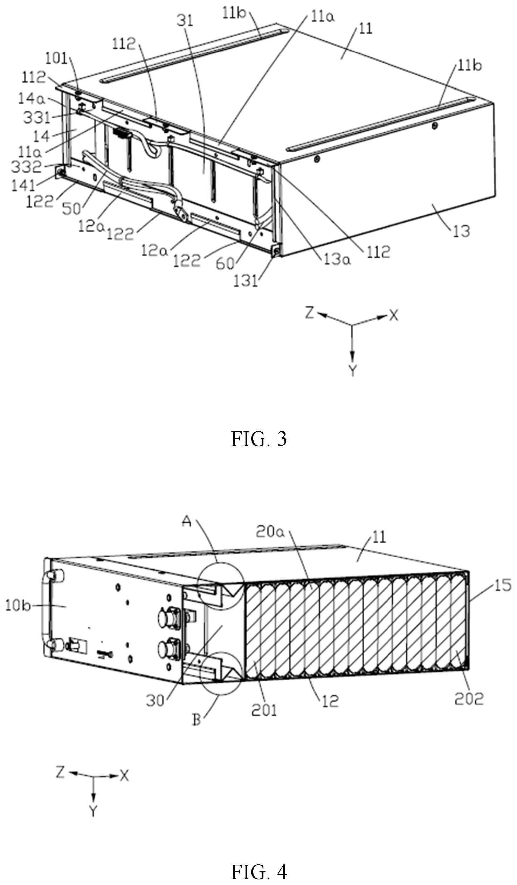

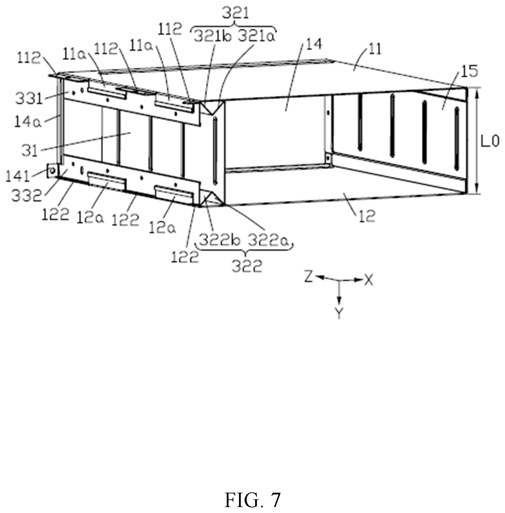

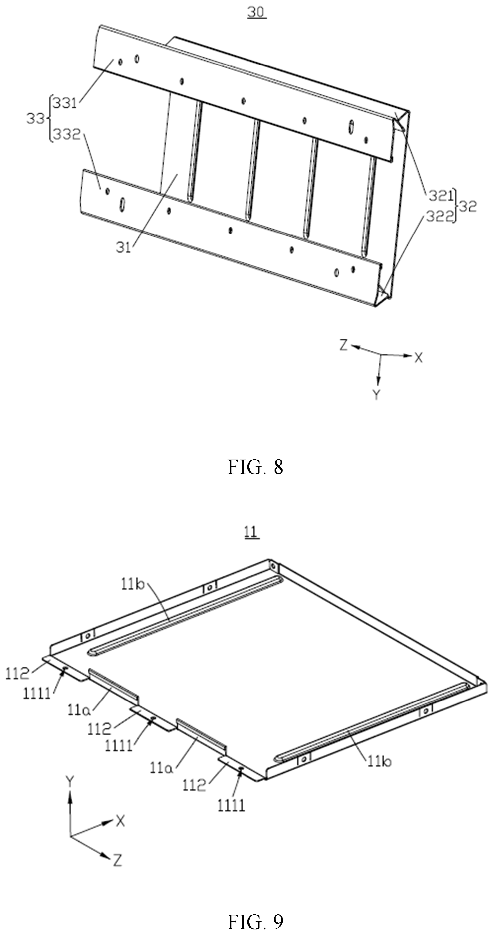

Referring to FIG. 3 to FIG. 14, in some embodiments, in some embodiments, the housing 10a includes a top wall 11. The top wall 11 is connected to the front cover 10b.

In some embodiments, the housing 10a includes a bottom wall 12. The top wall 11 and the bottom wall 12 are arranged along a second direction Y. The first direction X is perpendicular to the second direction Y.

In some embodiments, the top wall 11 is provided with a first extension portion 111. The first extension portion 111 is connected to the front cover 10b. Optionally, the first extension portion 111 is connected to an inner surface of the front cover 10b.

In some embodiments, the first extension portion 111 is fixed to the front cover 10b.

In some embodiments, the first extension portion 111 and the top wall 11 are integrally formed, for example, being integrally formed by an injection molding process. For example, the first extension portion 111 and the top wall 11 are formed by bending or stamping a metal plate.

In some embodiments, the first extension portion 111 may be fixed to the top wall 11 in other ways including but not limited to welding, bonding, and the like.

In some embodiments, the bottom wall 12 is provided with a second extension portion 121. The second extension portion 121 is connected to the front cover 10b. Optionally, the second extension portion 121 is connected to the inner surface of the front cover 10b.

In some embodiments, the second extension portion 121 and the bottom wall 12 are integrally formed, for example, being integrally formed by an injection molding process. For example, the second extension portion 121 and the bottom wall 12 are formed by bending or stamping a metal plate.

In some embodiments, the second extension portion 121 may be fixed to the bottom wall 12 in other ways including but not limited to welding, bonding, and the like.

In some embodiments, the second extension portion 121 is directly connected to the inner surface of the front cover 10b, where being directly connected means that the second extension portion 121 and the front cover 10b are directly connected without being connected through other components.

In some embodiments, the first extension portion 111 is fastened to the front cover 10b. A fastening manner includes but is not limited to fastener fixing, welding, bonding, and the like.

In some embodiments, the battery module 100 includes a fastener 101. The first extension portion 111 is provided with a first hole 1111. The front cover 10b is provided with a second hole 101b. The fastener 101 is disposed in the first hole 1111 and the second hole 101b, so that the first extension portion 111 is fastened to the front cover 10b. Optionally, the fastener 101 includes a screw.

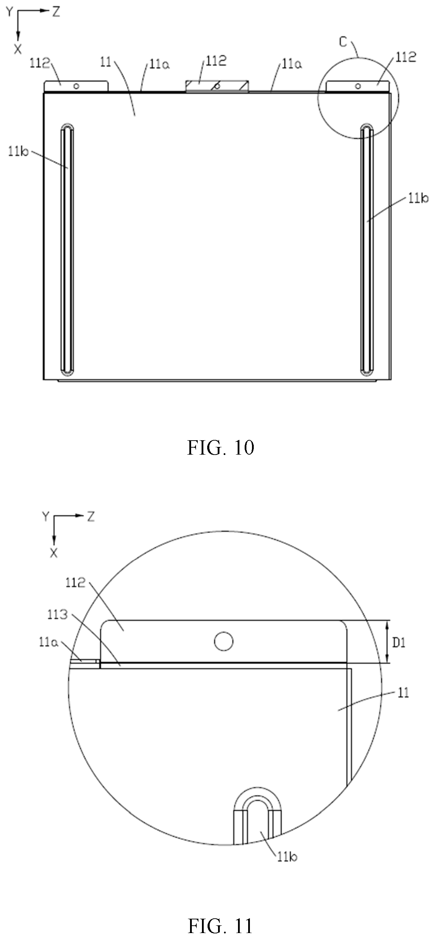

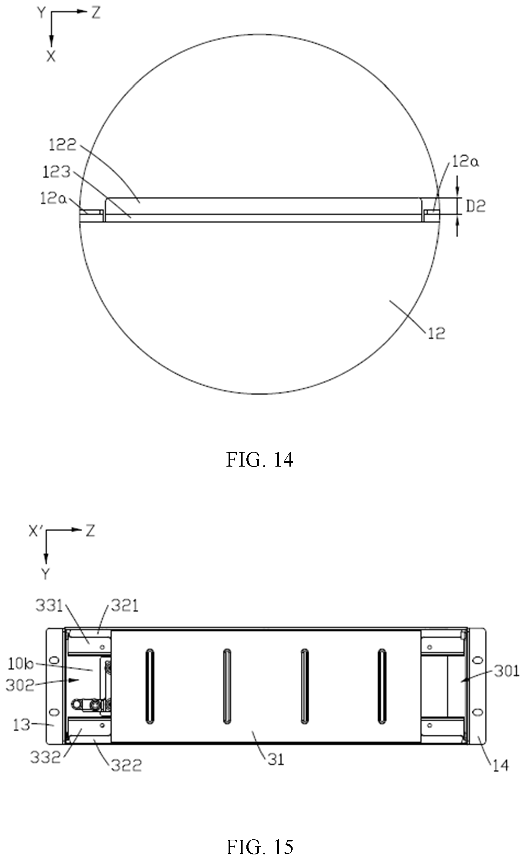

Referring to FIG. 11 and FIG. 14, in some embodiments, the first extension portion 111 includes a first extension connection portion 112, and the first extension connection portion 112 is connected to the front cover 10b. The second extension portion 121 includes a second extension connection portion 122, and the second extension connection portion 122 is connected to the front cover 10b. Along the first direction X, a length D2 of the second extension connection portion 122 is less than a length D1 of the first extension connection portion 112. When the cell assembly 20 swells, a swelling force acts on the elastic member 30, and the elastic member 30 applies the swelling force to the housing 10a. Over time, as the cell assembly 20 continues to swell, after the elastic member 30 is compressed to its limit, since the length D2 of the second extension connection portion 122 is less than the length D1 of the first extension connection portion 112, this helps the bottom wall 12 to be more easily pushed open by the elastic member 30, buffers the pressure of the cell assembly 20, reduces the risk of pressure explosion of the cell assembly 20, and improves the safety of the battery module 100. It can be understood that, in another embodiment, there is also a situation where the elastic member 30 is not compressed to its limit, and the cell assembly 20 pushes open the bottom wall 12.

In some embodiments, a stiffness of the first extension portion 111 is greater than a stiffness of the second extension portion 121. This helps the bottom wall 12 to be pushed open by the elastic member 30 and buffers the pressure of the cell assembly 20.

In some embodiments, a stiffness of the first extension connection portion 112 is greater than a stiffness of the second extension connection portion 122. This helps the bottom wall 12 to be pushed open by the elastic member 30 before the top wall 11 and buffers the pressure of the cell assembly 20.

In some embodiments, the first extension connection portion 112 is set as a regular structure, such as a rectangle and a square.

In some embodiments, the second extension connection portion 122 is set as a regular structure, such as a rectangle and a square.

In some other embodiments, the first extension connection portion 112 is set as an irregular structure. The length D1 of the first extension connection portion 112 refers to a maximum length of the first extension connection portion 112 in the first direction X.

In some other embodiments, the second extension connection portion 122 is set as an irregular structure. The length D2 of the second extension connection portion 122 refers to a maximum length of the second extension connection portion 122 in the first direction X.

In some embodiments, the first extension portion 111 includes a first bent portion 113. The first extension connection portion 112 is connected to the first bent portion 113. The elastic member 30 abuts against the first bent portion 113. This is conducive to improving the connection strength between the elastic member 30 and the housing 10a.

In some embodiments, the second extension portion 121 includes a second bent portion 123. The second extension connection portion 122 is connected to the second bent portion 123. The elastic member 30 abuts against the second bent portion 123. This is conducive to improving the connection strength between the elastic member 30 and the housing 10a.

In some embodiments, a stiffness of the top wall 11 is greater than a stiffness of the bottom wall 12. This further helps the cell assembly 20 to rush out from a side where the bottom wall 12 is located and helps to further improve the safety of the battery module 100.

In some embodiments, the first extension portion 111 and the second extension portion 121 are disposed in the front cover 10b, so that the front cover 10b limit the first extension portion 111 and the second extension portion 121, facilitating the connection between the housing 10a and the front cover 10b.

In some embodiments, the top wall 11 is provided with a first fixing portion 11a. Along the first direction X, a projection of the first fixing portion 11a overlaps with a projection of the elastic member 30. The elastic member 30 is fixed to the first fixing portion 11a.

In some embodiments, fixing includes but is not limited to abutting, bonding, welding, locking and fixing via fasteners, snap connection, and the like.

In some embodiments, the top wall 11 is provided with a plurality of first extension portions 111. The first fixing portion 11a is disposed between adjacent first extension portions 111. This facilitates uniform stress and uniform deformation of the elastic member 30.

In some embodiments, the bottom wall 12 is provided with a second fixing portion 12a. Along the first direction X, a projection of the second fixing portion 12a overlaps with the projection of the elastic member 30. The elastic member 30 is fixed to the second fixing portion 12a.

In some embodiments, the bottom wall 12 is provided with a plurality of second fixing portions 12a. The plurality of second fixing portions 12a are disposed between adjacent second extension portions 121. This facilitates uniform stress and uniform deformation of the elastic member 30.

In some embodiments, the first fixing portion 11a and the second fixing portion 12a are arranged along the second direction Y, facilitating uniform stress and uniform deformation of the elastic member 30.

In some embodiments, the housing 10a includes a first side wall 13. The first side wall 13 is connected to the top wall 11 and the bottom wall 12.

In some embodiments, the first side wall 13 is provided with a first fixing member 131. The first fixing member 131 is fixedly connected to the front cover 10b. Optionally, the first side wall 13 and the front cover 10b are locked and connected by the fastener 101 passing through the front cover 10b and the first fixing member 131.

In some embodiments, along the second direction Y, one side of the first side wall 13 is fixedly connected to the top wall 11, and another side the first side wall 13 is directly connected to the bottom wall 12, helping the elastic member 30 to push open the bottom wall 12. Optionally, the first side wall 13 is locked and connected to the front cover 10b and the top wall 11 by the fastener 101.

In some embodiments, the housing 10a includes a second side wall 14. The second side wall 14 is connected to the top wall 11 and the bottom wall 12. The first side wall 13 and the second side wall 14 are arranged along a third direction Z. The first direction X, the second direction Y, and the third direction Z are perpendicular to each other.

In some embodiments, the second side wall 14 is provided with a second fixing member 141. The second fixing member 141 is fixedly connected to the front cover 10b. Optionally, the second side wall 14 and the front cover 10b are locked and connected by the fastener 101 passing through the front cover 10b and the second fixing member 141.

In some embodiments, along the second direction Y, one side of the second side wall 14 is fixedly connected to the top wall 11, and another side of the second side wall 14 is directly connected to the bottom wall 12, helping the elastic member 30 to push open the bottom wall 12. Optionally, the second side wall 14 is locked and connected to the front cover 10b and the top wall 11 by the fastener 101.

In some embodiments, the first side wall 13 is provided with a third fixing portion 13a. The elastic member 30 is fixed to the third fixing portion 13a. Optionally, the elastic member 30 abuts against the third fixing portion 13a.

In some embodiments, the second side wall 14 is provided with a fourth fixing portion 14a. The third fixing portion 13a and the fourth fixing portion 14a are arranged along the third direction Z. The elastic member 30 is fixed to the fourth fixing portion 14a. Optionally, the elastic member 30 abuts against the fourth fixing portion 14a.

Through the first fixing portion 11a, the second fixing portion 12a, the third fixing portion 13a, and the fourth fixing portion 14a, the elastic member 30 abuts against the housing 10a on two sides along the second direction Y and on two sides along the third direction Z, facilitating uniform stress and uniform deformation of the elastic member 30.

In some embodiments, the housing 10a includes a rear wall 15. The rear wall 15 is connected to the top wall 11, the bottom wall 12, the first side wall 13, and the second side wall 14. Along the first direction X, the cell assembly 20 is disposed between the elastic member 30 and the rear wall 15.

In some embodiments, a stiffness of the elastic member 30 is greater than a stiffness of the rear wall 15. When the cell assembly 20 swells, the elastic member 30 deforms before the rear wall 15, and the elastic member 30 provides a swelling space for the cell assembly 20.

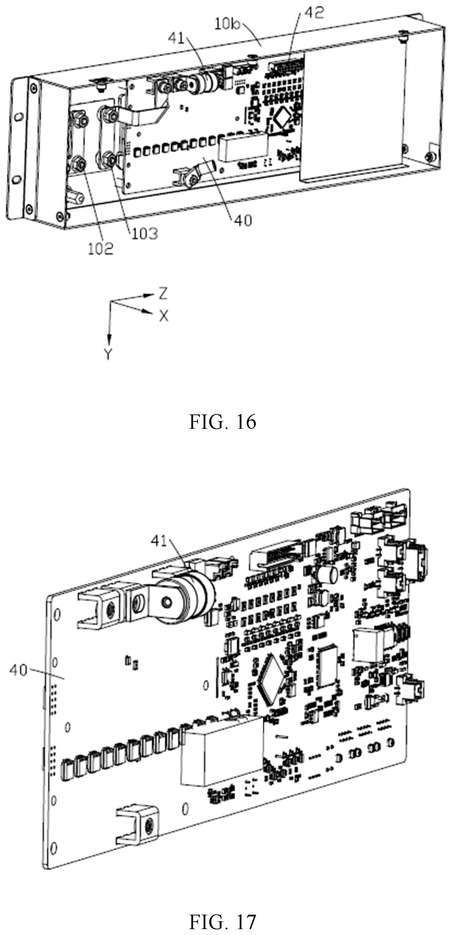

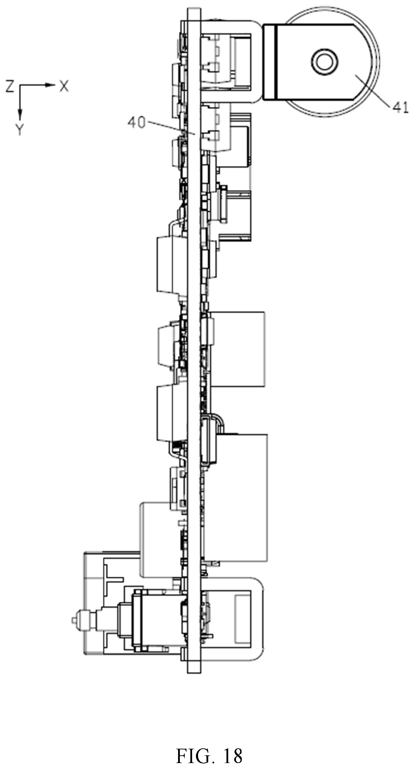

Referring to FIG. 15 to FIG. 19, in some embodiments, the battery module 100 includes a circuit board 40. The circuit board 40 is disposed on the front cover 10b. A side of the circuit board 40 is provided with a first component 41, the side of the circuit board 40 being a side facing the elastic member 30.

In some embodiments, the first component 41 includes a fuse apparatus.

In some embodiments, the fuse apparatus may be a circuit breaker. As an example, the circuit breaker may be a fuse or a short-circuit apparatus having a fuse structure.

In some embodiments, the fuse apparatus may be disposed in a power circuit of the battery module 100. It can be understood that, optionally, the power circuit of the battery module 100 may include a discharge circuit for the battery module 100 to discharge externally, and may further include a charging circuit for charging the battery module 100.

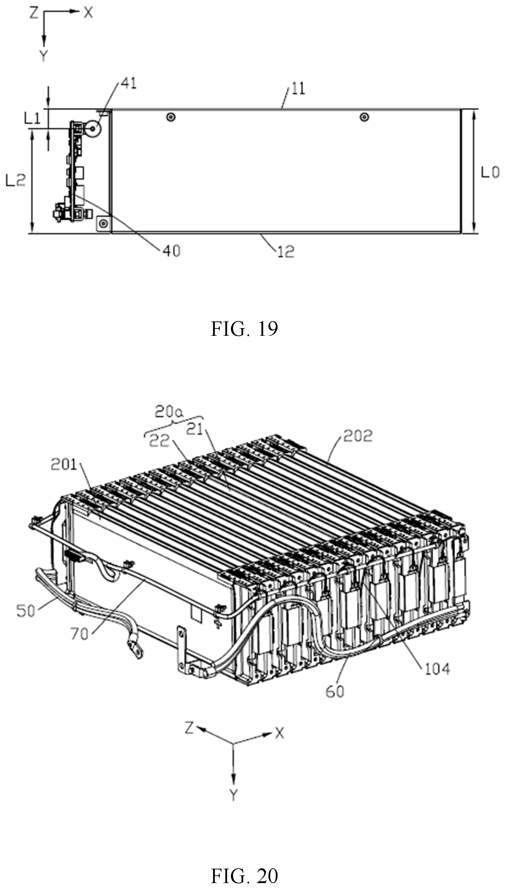

Referring to FIG. 19, in some embodiments, along the second direction Y, a distance from the first component 41 to the top wall 11 is L1, and a distance from the first component 41 to the bottom wall 12 is L2, where L1 is less than L2. Disposing the first component 41 closer to the top wall 11 reduces the risk of damage to the first component 41 caused when the elastic member 30 pushes open the bottom wall 12 and the cell assembly 20 rushes out of the bottom wall 12.

In some embodiments, when L1 and L2 are measured, a test position on the first component 41 is the highest point where the first component 41 protrudes from the circuit board 40.

In some embodiments, along the second direction Y, a distance between the bottom wall 12 and the top wall 11 is L0, and L1 is less than 1/4L0, further reducing the risk of the cell assembly 20 coming into contact with the first component 41 and causing damage to the first component 41.

In some embodiments, along the first direction X, the first component 41 protrudes from the circuit board 40 relative to other components.

Optionally, the circuit board 40 includes a BMS component (Battery Management System). The BMS component includes a plurality of electronic components. The plurality of electronic components can implement functions such as control, protection, communication, power calculation, signal transmission, and power transmission of the cell assembly 20.

Optionally, the circuit board 40 includes a flexible circuit board (FPC, Flexible Printed Circuit). Optionally, the circuit board 40 includes a printed circuit board (PCB, Printed Circuit Board).

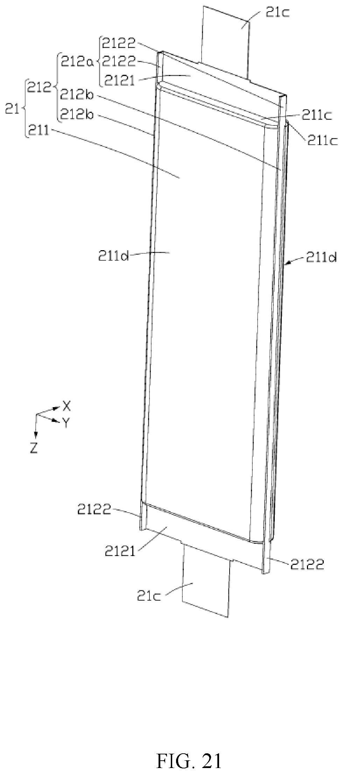

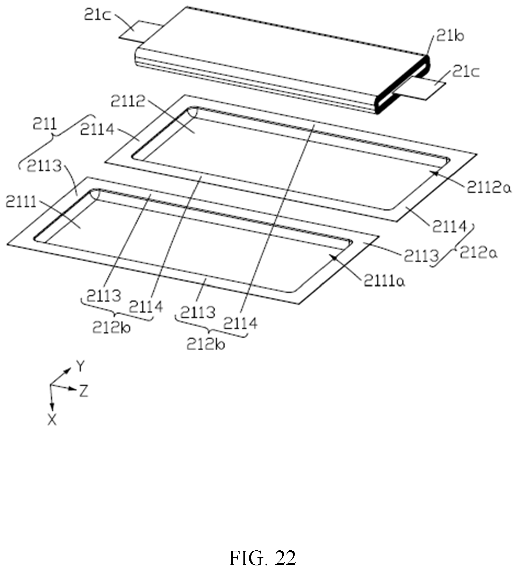

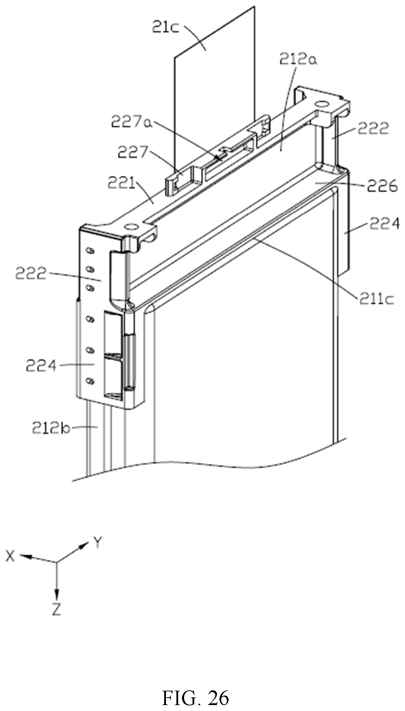

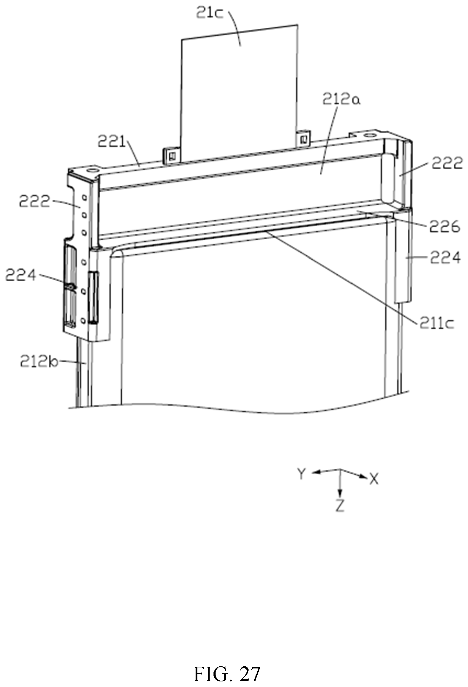

Referring to FIG. 20 to FIG. 28, in some embodiments, the cell assembly 20 includes a plurality of cell units 20a. The plurality of cell units 20a are stacked along the first direction X.

In some embodiments, the cell unit 20a includes a first cell unit 201 and a second cell unit 202. The first cell unit 201 and the second cell unit 202 are cell units located at an outermost side of the cell assembly 20. The first cell unit 201 is connected to the elastic member 30. The second cell unit 202 is connected to the rear wall 15.

In some embodiments, the cell unit 20a includes a cell 21. The cell 21 includes a cell housing 21a, an electrode assembly 21b, and an electrode terminal 21c. The cell housing 21a includes a body portion 211. The electrode assembly 21b is disposed in the body portion 211. The electrode terminal 21c is connected to the electrode assembly 21b and led out from the cell housing 21a.

In some embodiments, the cell unit 20a is connected to the bottom wall 12. The cell unit 20a is configured such that when the cell 21 swells, along a direction opposite to the first direction X, the cell unit 20a moves relative to the bottom wall 12.

In some embodiments, the cell unit 20a is connected to the bottom wall 12. The cell unit 20a is configured such that when the swelling of the cell 21 decreases, along the first direction X, the cell unit 20a moves relative to the bottom wall 12.

In some embodiments, the battery module 100 includes a first insulating sheet 110. The first insulating sheet 110 is disposed between the bottom wall 12 and the cell assembly 20 to enhance insulation between the cell assembly 20 and the bottom wall 12.

In some embodiments, the cell assembly 20 and the first insulating sheet 110 are connected to each other. For example, the cell assembly 20 and the first insulating sheet 110 are in contact connection with each other. The cell unit 20a is configured such that when the cell unit 20a swells, along the direction opposite to the first direction X, the cell unit 20a moves on the first insulating sheet 110.

In some embodiments, the cell assembly 20 and the first insulating sheet 110 are connected to each other. For example, the cell assembly 20 and the first insulating sheet 110 are in contact connection with each other. The cell unit 20a is configured such that when the swelling of the cell 21 decreases, along the first direction X, the cell unit 20a moves on the first insulating sheet 110.

In some embodiments, a friction coefficient between the cell unit 20a and the first insulating sheet 110 is less than a friction coefficient between the cell unit 20a and the bottom wall 12, which facilitates the movement of the cell unit 20a.

In some embodiments, the cell housing 21a includes a sealing portion 212. The sealing portion 212 is connected to the body portion 211. The electrode terminal 21c led out from the cell housing 21a from the sealing portion 212.

In some embodiments, the body portion 211 includes a first housing 2111 and a second housing 2112. The first housing 2111 is provided with a first recess 2111a. The second housing 2112 is provided with a second recess 2112a. The first housing 2111 is connected to the second housing 2112 to form an accommodation space. A portion of the electrode assembly 21b is disposed in the first recess 2111a, and another portion is disposed in the second recess 2112a. A peripheral side of the first housing 2111 extends outward to form a first extension edge 2113. A peripheral side of the second housing 2112 extends outward to form a second extension edge 2114. After the first housing 2111 is connected to the second housing 2112, the first extension edge 2113 and the second extension edge 2114 overlap and are connected in a sealing manner to form the sealing portion 212.

In some embodiments, the sealing portion 212 includes a first sealing portion 212a. The electrode terminal 21c led out from the cell housing 21a from the first sealing portion 212a.

In some embodiments, the sealing portion 212 includes a second sealing portion 212b. The second sealing portion 212b is connected to the first sealing portion 212a.

In some embodiments, the first extension edge 2113 and the second extension edge 2114 overlap and are connected in a sealing manner to form two first sealing portions 212a and two second sealing portions 212b. The two first sealing portions 212a are arranged along the third direction Z. The two second sealing portions 212b are arranged along the second direction Y. One first sealing portion 212a is connected to the two second sealing portions 212b, and the other first sealing portion 212a is connected to the two second sealing portions 212b.

In some embodiments, the cell 21 includes two electrode terminals 21c. One electrode terminal 21c led out from the cell housing 21a from one of the two first sealing portions 212a, and the other electrode terminal 21c led out from the cell housing 21a from the other of the two first sealing portions 212a.

In some embodiments, the two electrode terminals 21c led out from the cell housing 21a from a same first sealing portion 212a.

In an embodiment, adjacent body portions 211 are in contact connection with each other, which facilitates pressurization of the body portion 211.

In an embodiment, there is pressure between adjacent cell housings 21a, so that the plurality of cell units 20a are in a pressurized state, which is conducive to extending the service life of the cell unit 20a.

In some embodiments, the first sealing portion 212a includes a first sealing connection portion 2121 and two first sealing bent portions 2122. The first sealing connection portion 2121 is connected to the two first sealing bent portions 2122. The two first sealing bent portions 2122 are disposed opposite to each other along the second direction Y. The electrode terminal 21c led out from the cell housing 21a from the first sealing connection portion 2121.

In some embodiments, the cell housing 21a includes an aluminum-plastic film.

In some embodiments, the cell 21 includes but is not limited to a pouch cell, a prismatic cell, and a cylindrical cell.

In some embodiments, each cell unit 20a further includes a support 22. The support 22 covers at least a part of the cell housing 21a.

In some embodiments, the support 22 is configured such that when the cell 21 swells, along the direction opposite to the first direction X, the support 22 moves relative to the housing 10a.

In some embodiments, the support 22 is configured such that when the swelling of the cell 21 decreases, along the first direction X, the support 22 moves relative to the housing 10a.

In some embodiments, the support 22 is connected to the bottom wall 12. The support 22 is configured such that when the cell 21 swells, along the direction opposite to the first direction X, the support 22 moves relative to the bottom wall 12.

In some embodiments, the support 22 is connected to the bottom wall 12. The support 22 is configured such that when the swelling of the cell 21 decreases, along the first direction X, the support 22 moves relative to the bottom wall 12.

In some embodiments, the support 22 is in direct contact with the first insulating sheet 110. The support 22 is configured such that when the cell 21 swells, along the direction opposite to the first direction X, the support 22 moves on the first insulating sheet 110.

In some embodiments, the support 22 is in direct contact with the first insulating sheet 110. The support 22 is configured such that when the swelling of the cell 21 decreases, along the first direction X, the support 22 moves on the first insulating sheet 110.

In some embodiments, the support 22 is integrally formed on the cell 21, which can improve the connection strength between the support 22 and the cell 21, where being integrally formed means that the support 22 and the cell 21 are directly fixed. An integral forming method includes but is not limited to a pouring process and an injection molding process.

In some embodiments, after an insulating material is provided around the cell 21 by a pouring process, the insulating material is cured to form the support 22, and the support 22 and the cell 21 are bonded and fixed. For example, the cell 21 is placed into a mold, and the insulating material is poured into the mold; and after the insulating material is cured to form the support 22 bonded and fixed to the cell 21, the support 22 and the cell 21 are taken out from the mold.

In some embodiments, the insulating material includes but is not limited to a potting adhesive and a foamed adhesive.

In some embodiments, the injection molding process includes the following steps: the cell 21 is placed into a mold, an injection molding device heats and melts the insulating material, the melted insulating material flows into the mold, and after the insulating material is cured to form the support 22 bonded and fixed to the cell 21, the support 22 and the cell 21 are taken out from the mold. Optionally, the insulating material includes polyamide.

In some embodiments, the support 22 is an insulating support, which can reduce the risk of short circuit between the support 22 and the cell 21.

In some embodiments, the support 22 includes a first support 22a. The first support 22a covers at least a part of the sealing portion 212.

In some embodiments, the first support 22a includes at least one first side portion 222. Each first side portion 222 covers one first sealing bent portion 2122. The first support 22a covers a part of the first sealing portion 212a, so that the protection for the first sealing portion 212a is improved.

In some embodiments, the first side portion 222 is connected to the bottom wall 12. The first side portion 222 is configured such that when the cell 21 swells, along the direction opposite to the first direction X, the first side portion 222 moves relative to the bottom wall 12.

In some embodiments, the first side portion 222 is connected to the bottom wall 12. The first side portion 222 is configured such that when the swelling of the cell 21 decreases, along the first direction X, the first side portion 222 moves relative to the bottom wall 12.

In some embodiments, the first side portion 222 is connected to the first insulating sheet 110. The first side portion 222 is configured such that when the cell 21 swells, along the direction opposite to the first direction X, the first side portion 222 moves on the first insulating sheet 110. For example, the first side portion 222 is in direct contact with the first insulating sheet 110.

In some embodiments, the first side portion 222 is connected to the first insulating sheet 110. The first side portion 222 is configured such that when the swelling of the cell 21 decreases, along the first direction X, the first side portion 222 moves on the first insulating sheet 110. For example, the first side portion 222 is in direct contact with the first insulating sheet 110.

In some embodiments, the first support 22a includes two first side portions 222. The first side portions 222 are arranged along the second direction Y. One of the first side portions 222 is connected to the first insulating sheet 110.

When the cell 21 swells, the first sealing portion 212a can move relative to the first insulating sheet 110 through the first side portion 222. Through the first side portion 222, friction between the first sealing portion 212a and the first insulating sheet 110 during movement can be reduced, facilitating the movement and protection for the first sealing portion 212a, and reducing the risk of the first sealing portion 212a being damaged and affecting the use of the battery module 100.

In some embodiments, the first support 22a includes a first connection portion 221. The first connection portion 221 covers at least a part of the first sealing connection portion 2121 to improve the protection for the first sealing portion 212a.

In some embodiments, along the second direction Y, one end of the first connection portion 221 is connected to one first side portion 222, and another end is connected to another first side portion 222, which can improve the structural strength of the first support 22a and facilitate the protection for the first sealing portion 212a.

In some embodiments, the first support 22a includes at least one first side extension portion 224. The first side extension portion 224 covers a part of the body portion 211. The first side extension portion 224 can protect the body portion 211 and increase the connection strength between the first support 22a and the cell 21.

In some embodiments, the first support 22a includes at least one first side extension portion 224. The first side extension portion 224 covers a part of the body portion 211 and one second sealing portion 212b, and the first side extension portion 224 and the second sealing portion 212b are located on a same side of the body portion 211. The first side extension portion 224 can protect the body portion 211 and the second sealing portion 212b and increase the connection strength between the first support 22a and the cell 21.

In some embodiments, the first support 22a includes two first side extension portions 224. The two first side extension portions 224 are arranged along the second direction Y. One first side extension portion 224 covers a part of the body portion 211 and one second sealing portion 212b, and the first side extension portion 224 and the second sealing portion 212b are located on a same side of the body portion 211. The other first side extension portion 224 covers a part of the body portion 211 and the other second sealing portion 212b, and the first side extension portion 224 and the second sealing portion 212b are located on a same side of the body portion 211. The first side extension portion 224 can protect the body portion 211 and the second sealing portion 212b and increase the connection strength between the first support 22a and the cell 21.

In some embodiments, the first side extension portion 224 is connected to the bottom wall 12. The first side extension portion 224 is configured such that when the cell 21 swells, along the direction opposite to the first direction X, the first side extension portion 224 moves relative to the bottom wall 12.

In some embodiments, the first side extension portion 224 is connected to the bottom wall 12. The first side extension portion 224 is configured such that when the swelling of the cell 21 decreases, along the first direction X, the first side extension portion 224 moves relative to the bottom wall 12.

In some embodiments, the first side extension portion 224 is connected to the first insulating sheet 110. The first side extension portion 224 is configured such that when the cell 21 swells, along the direction opposite to the first direction X, the first side extension portion 224 moves on the first insulating sheet 110. For example, the first side extension portion 224 is in direct contact with the first insulating sheet 110.

In some embodiments, the first side extension portion 224 is connected to the first insulating sheet 110. The first side extension portion 224 is configured such that when the swelling of the cell 21 decreases, along the first direction X, the first side extension portion 224 moves on the first insulating sheet 110. For example, the first side extension portion 224 is in direct contact with the first insulating sheet 110.

When the cell 21 swells, the body portion 211 can move on the first insulating sheet 110 through the first side extension portion 224. Through the first side extension portion 224, friction between the body portion 211 and the first insulating sheet 110 during movement can be reduced, facilitating the movement and protection for the body portion 211, and reducing the risk of the body portion 211 being damaged and affecting the use of the battery module 100.

In some embodiments, the first side extension portion 224 extends from the first side portion 222, helping to improve the connection strength between the first side extension portion 224 and the first side portion 222.

In some embodiments, the body portion 211 includes a first wall 211c. The first sealing portion 212a is connected to the first wall 211c.

In some embodiments, the first support 22a includes a second connection portion 226. The second connection portion 226 covers a part of the first wall 211c to protect the body portion 211. One end of the first connection portion 221 is connected to one first side portion 222, and another end is connected to the other first side portion 222. One end of the second connection portion 226 is connected to one first side portion 222, and another end is connected to the other first side portion 222. This can further improve the structural strength of the first support 22a and further facilitate the protection for the first sealing portion 212a.

In some embodiments, the first support 22a includes two second connection portions 226 and two first walls 211c.

In some embodiments, the first support 22a includes a protrusion 227. Along a direction opposite to the second direction Y, the protrusion 227 protrudes from the first connection portion 221.

In some embodiments, the battery module 100 includes a detection member (not shown in the figures). A side of the protrusion 227 is provided with an accommodation groove 227a, the side of the protrusion 227 being a side facing away from the electrode terminal 21c. The detection member is accommodated in the accommodation groove 227a. The detection member is configured to detect the temperature of the cell 21. Optionally, the detection member is configured to detect the temperature of the electrode terminal 21c. This helps to improve the accuracy of detecting the temperature of the cell 21.

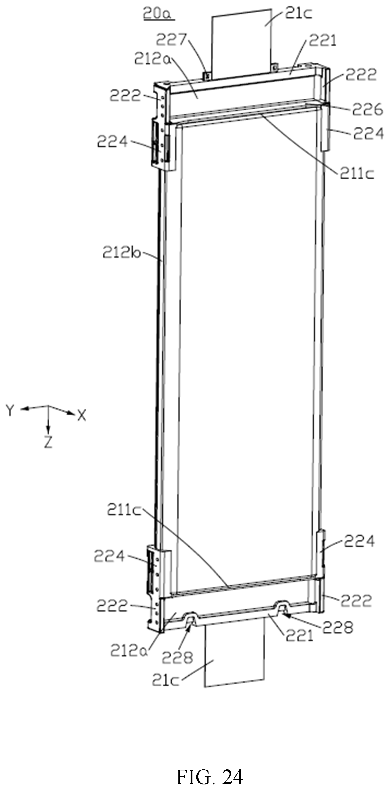

Referring to FIG. 24, when viewed along the direction opposite to the first direction X, the electrode terminal 21c is not blocked by the protrusion 227. In some embodiments, the body portion 211 includes two second walls 211d. The two second walls 211d are arranged along the first direction X. The first wall 211c is connected to the second wall 211d and the first sealing portion 212a.

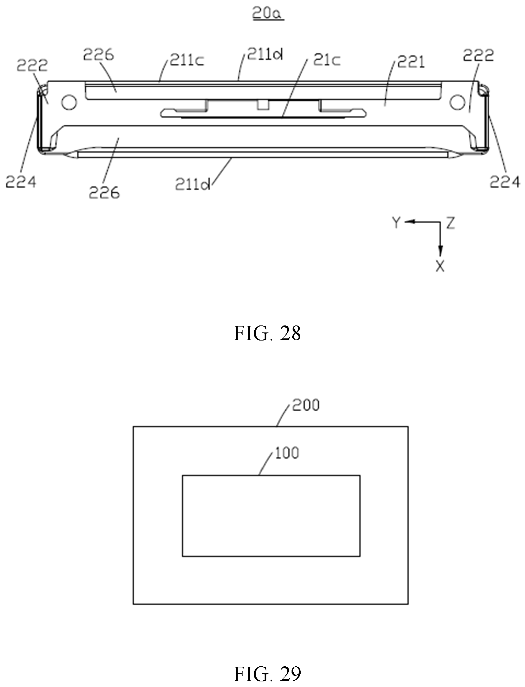

In some embodiments, referring to FIG. 28, when viewed along the third direction Z, in the first direction X, the second connection portion 226 does not extend beyond the second wall 211d. The body portions 211 of adjacent cells 21 may be in contact connection with each other. Adjacent cells 21 apply pressure to each other through the body portions 211.

In some embodiments, referring to FIG. 28, when viewed along the third direction Z, in the first direction X, the second connection portion 226 is disposed between the two second walls 211d. When the body portions 211 of adjacent cells 21 apply pressure to each other, the force applied to the first sealing portion 212a can be reduced, and the protection for the first sealing portion 212a can be improved.

In some embodiments, referring to FIG. 28, when viewed along the third direction Z, in the first direction X, the first side portion 222 is disposed between the two second walls 211d. When the body portions 211 of adjacent cells 21 apply pressure to each other, the force applied to the first sealing portion 212a can be reduced, and the protection for the first sealing portion 212a can be improved.

In some embodiments, when viewed along the third direction Z, in the first direction X, the first side extension portion 224 is disposed between the two second walls 211d. When the body portions 211 of adjacent cells 21 apply pressure to each other, the force applied to the first sealing portion 212a can be reduced, and the protection for the first sealing portion 212a can be improved.

In some embodiments, the support 22 includes a second support 22b. The second support 22b is connected to the other first sealing portion 212a.

In some embodiments, the first support 22a and the second support 22b have the same structure.

In some embodiments, the first support 22a and the second support 22b are similar, so repeated descriptions of structures identical or similar to the first support in the foregoing embodiments will be omitted. The following will focus on structures different from those in the foregoing embodiments.

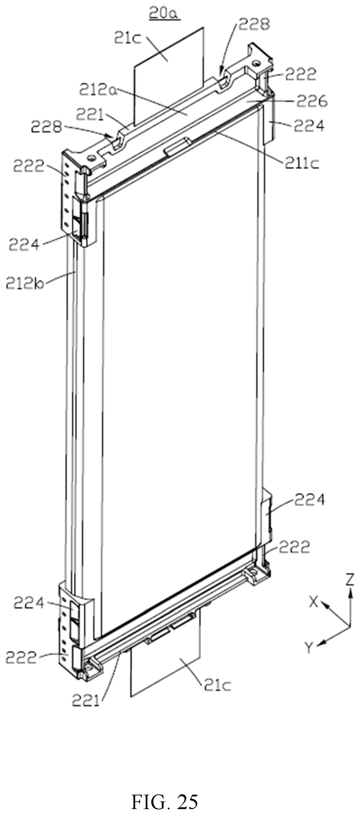

Referring to FIG. 24 and FIG. 25, in some embodiments, the second support 22b is provided with a notch 228. A part of the first sealing connection portion 2121 of the other first sealing portion 212a is disposed in the notch 228. When the cell 21 swells, the pressure inside the cell 21 can be discharged through the first sealing connection portion 2121 in the notch 228, thereby facilitating pressure release and improving the safety of the cell unit 20a.

In some embodiments, the notch 228 and the detection member are disposed on different supports, reducing the risk of damage to the detection member during pressure release.

In some embodiments, the first support 22a may be provided with the notch 228 as shown in the second support 22b.

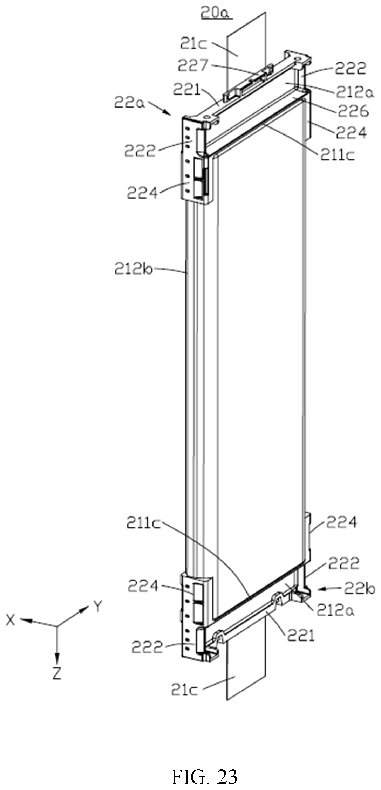

Referring to FIG. 25, in some embodiments, the second support 22b is not provided with the protrusion 227 as shown in FIG. 23.

Referring to FIG. 10 to FIG. 13, in some embodiments, the top wall 11 is provided with two first limiting portions 11b. The two first limiting portions 11b are spaced apart from each other along the third direction Z. Each first limiting portion 11b extends along the first direction X. The body portion 211 is disposed between the two first limiting portions 11b. The movement of the cell assembly 20 is further guided by the two first limiting portions 11b. Optionally, the two first limiting portions 11b guide the movement of the cell assembly 20 along the direction opposite to the first direction X. Optionally, the first limiting portion 11b is formed by protruding from the top wall 11 to the bottom wall 12.

In some embodiments, the body portion 211 of each cell unit 20a is disposed between the two first limiting portions 11b.

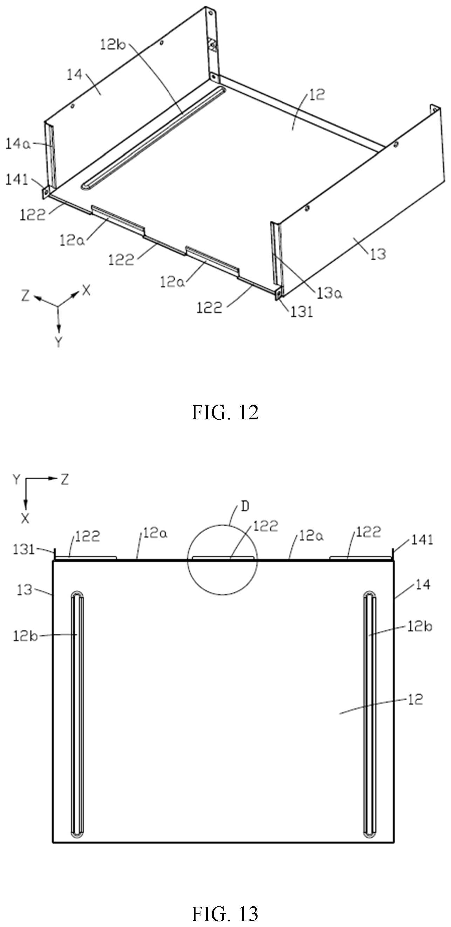

Referring to FIG. 2 and FIG. 12, in some embodiments, the bottom wall 12 is provided with two second limiting portions 12b. The two second limiting portions 12b are spaced apart from each other along the third direction Z. Each second limiting portion 12b extends along the first direction X. The body portion 211 is disposed between the two second limiting portions 12b. The movement of the cell assembly 20 is guided by the two second limiting portions 12b. Optionally, the two second limiting portions 12b guide the movement of the cell assembly 20 along the direction opposite to the first direction X. Optionally, the second limiting portion 12b is formed by protruding from the bottom wall 12 to the top wall 11.

In some embodiments, the body portion 211 of each cell unit 20a is disposed between the two second limiting portions 12b.

In some embodiments, the bottom wall 12 is provided with two second limiting portions 12b. The top wall 11 is provided with two first limiting portions 11b.

Referring to FIG. 2, FIG. 4, FIG. 7, and FIG. 8, in some embodiments, the elastic member 30 includes a base portion 31, a buffer portion 32, and a connection portion 33. The base portion 31 is connected to the cell assembly 20. The buffer portion 32 is connected to the base portion 31 and the connection portion 33.

In some embodiments, the connection portion 33 is fixed to the housing 10a.

In some embodiments, along the first direction X, the cell assembly 20 is disposed between the base portion 31 and the rear wall 15. The rear wall 15 is connected to the cell assembly 20. The base portion 31 is connected to the cell assembly 20. The base portion 31 is configured to apply pressure to the cell assembly 20.

In some embodiments, the base portion 31 is connected to the first cell unit 201. Optionally, the base portion 31 is in direct contact with the first cell unit 201. Optionally, the base portion 31 and the first cell unit 201 may be connected by other components.

In some embodiments, the battery module 100 includes a first buffer member 120. The first buffer member 120 is disposed between the base portion 31 and the first cell unit 201. Optionally, the first buffer member 120 includes foam.

In some embodiments, the hardness of the first buffer member 120 is less than the hardness of the base portion 31, reducing the damage to the first cell unit 201 by the base portion 31.

In some embodiments, the rear wall 15 is connected to the second cell unit 202.

In some embodiments, the battery module 100 includes a second buffer member 130. The second buffer member 130 is disposed between the second cell unit 202 and the rear wall 15. Optionally, the second buffer member 130 includes foam.

In some embodiments, the hardness of the second buffer member 130 is less than the hardness of the rear wall 15, reducing the damage to the second cell unit 202 by the rear wall 15.

In some embodiments, along the first direction X, a projection of the body portion 211 is located within a projection of the base portion 31, which can increase an acting area between the base portion 31 and the body portion 211 and help the base portion 31 to apply pressure to the body portion 211.

In some embodiments, the material of the foam includes ethylene-vinyl acetate copolymer (EVA).

Referring to FIG. 3, FIG. 15, and FIG. 20, in some embodiments, the battery module 100 includes a first conductive member 50. Along the second direction Y, a first gap 301 is provided between the base portion 31 and the housing 10a. One end of the first conductive member 50 is connected to the cell assembly 20, and another end passes through the first gap 301.

In some embodiments, along the second direction Y, the first gap 301 is provided between the base portion 31 and the second side wall 14.

In some embodiments, one end of the first conductive member 50 is connected to the first cell unit 201.

In some embodiments, the first conductive member 50 is fixed to the elastic member 30.

In some embodiments, the first conductive member 50 is configured to move with the elastic member 30. Under operating conditions such as swelling, vibration, and dropping of the cell unit, the first conductive member 50 moves with the elastic member 30, so that the pulling on the first conductive member 50 can be reduced, the risk of the first conductive member 50 being pulled apart can be reduced, and the safety of the battery module 100 can be improved. Optionally, the first conductive member 50 includes a wire harness.

In some embodiments, the first conductive member 50 is configured to transmit the power of the cell assembly 20. The first conductive member 50 can transmit the power of the cell assembly 20. When the battery module 100 is discharged, the electric energy of the cell assembly 20 can be transmitted to a load of an electric device through the first conductive member 50 so as to supply power to the load of the electric device. When the battery module 100 is charged, external electric energy can be transmitted to the cell assembly 20 through the first conductive member 50 to charge the cell assembly 20.

In some embodiments, the battery module 100 includes a second conductive member 60. A second gap 302 is provided between the base portion 31 and the housing 10a. One end of the second conductive member 60 is connected to the cell assembly 20, and another end passes through the second gap 302.

In some embodiments, the second gap 302 is provided between the base portion 31 and the first side wall 13.

In some embodiments, one end of the second conductive member 60 is connected to the second cell unit 202.

In some embodiments, the second conductive member 60 and the elastic member 30 are separately disposed. Under operating conditions such as swelling, vibration, and dropping of the cell unit, the second conductive member 60 and the elastic member 30 are separately disposed, which is conducive to reducing the pulling on the second conductive member 60, reducing the risk of the second conductive member 60 being pulled apart, and improving the safety of the battery module 100. Optionally, the second conductive member 60 includes a wire harness.

In some embodiments, the second conductive member 60 is configured to transmit the power of the cell assembly 20. The second conductive member 60 can transmit the power of the cell assembly 20. When the battery module is discharged, the electric energy of the cell assembly 20 can be transmitted to a load of an electric device through the second conductive member 60 so as to supply power to the load of the electric device. When the battery module is charged, external electric energy can be transmitted to the cell assembly 20 through the second conductive member 60 to charge the cell assembly 20.

In some embodiments, one of the first conductive member 50 and the second conductive member 60 is connected to a main positive electrode terminal of the cell assembly 20, and the other is connected to a main negative electrode terminal of the cell assembly 20.

In some embodiments, the buffer portion 32 is configured to provide a swelling space for the cell assembly 20.

In some embodiments, the buffer portion 32 includes a first buffer portion 321. The first buffer portion 321 is connected to the base portion 31. The first buffer portion 321 can act on the cell assembly 20 through the base portion 31, and the first buffer portion 321 is configured to provide a swelling space for the cell assembly 20.

In some embodiments, the buffer portion 32 includes a second buffer portion 322. Along the second direction Y, the first buffer portion 321 and the second buffer portion 322 are disposed opposite to each other. The first buffer portion 321 is connected to one side of the base portion 31, and the second buffer portion 322 is connected to another side of the base portion 31. The second buffer portion 322 can act on the cell assembly 20 through the base portion 31, and the second buffer portion 322 is configured to provide a swelling space for the cell assembly 20.

In some embodiments, the connection portion 33 includes a first connection portion 331. The first connection portion 331 is connected to the first buffer portion 321.

In some embodiments, along the first direction X, a projection of the first connection portion 331 overlaps with a projection of the first fixing portion 11a. The first connection portion 331 is fixed to the first fixing portion 11a, so that the acting force received by the buffer portion 32 can be transferred to the housing 10a.

In some embodiments, the first connection portion 331 is fixed to the third fixing portion 13a, which is conducive to transferring the acting force received by the buffer portion 32 to the housing 10a. Optionally, the first connection portion 331 abuts against the third fixing portion 13a.

In some embodiments, the first connection portion 331 is fixed to the fourth fixing portion 14a, which is conducive to transferring the acting force received by the buffer portion 32 to the housing 10a. Optionally, the first connection portion 331 abuts against the fourth fixing portion 14a.

In some embodiments, the connection portion 33 includes a second connection portion 332. The first connection portion 331 and the second connection portion 332 are disposed opposite to each other along the second direction Y. The second connection portion 332 is connected to the second buffer portion 322.

In some embodiments, along the first direction X, a projection of the second fixing portion 12a overlaps with a projection of the second connection portion 332. The second connection portion 332 is fixed to the second fixing portion 12a, so that the acting force received by the buffer portion 32 can be transferred to the housing 10a.

In some embodiments, the second connection portion 332 is fixed to the third fixing portion 13a, which is conducive to transferring the acting force received by the buffer portion 32 to the housing 10a. Optionally, the second connection portion 332 abuts against the third fixing portion 13a.

In some embodiments, the second connection portion 332 is fixed to the fourth fixing portion 14a, which is conducive to transferring the acting force received by the buffer portion 32 to the housing 10a. Optionally, the second connection portion 332 abuts against the fourth fixing portion 14a.

In this application, the first connection portion 331 is fixed to the first fixing portion 11a, the third fixing portion 13a, and the fourth fixing portion 14a. The second connection portion 332 is connected to the second fixing portion 12a, the third fixing portion 13a, and the fourth fixing portion 14a. This facilitates uniform stress and uniform deformation of the elastic member 30.

In some embodiments, the strength of the top wall 11, the bottom wall 12, the first side wall 13, and the second side wall 14 is greater than the strength of the elastic member 30, reducing the risk of deformation of the top wall 11, the bottom wall 12, the first side wall 13, and the second side wall 14 caused by the acting force received by the buffer portion 32.

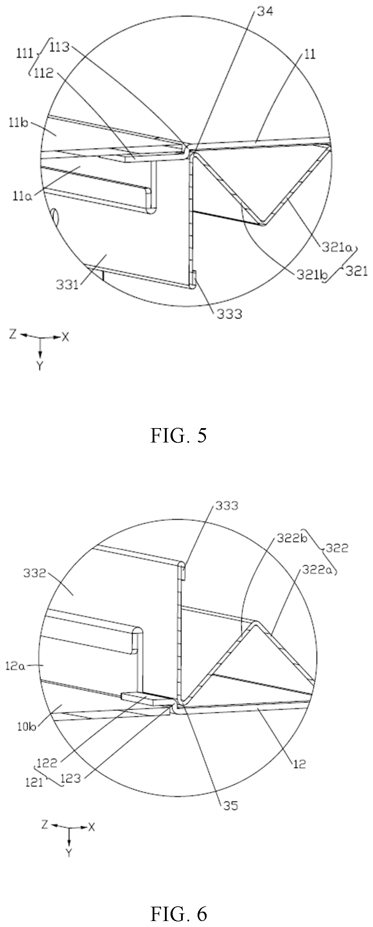

Referring to FIG. 5 to FIG. 8, in some embodiments, the first buffer portion 321 includes a first segment 321a and a second segment 321b. The first segment 321a is connected to the base portion 31. The second segment 321b is connected to the first segment 321a and the first connection portion 331.

In some embodiments, an included angle formed by the first segment 321a and the base portion 31 is the same as an included angle formed by the second segment 321b and the first connection portion 331, which facilitates uniform stress and uniform deformation of the elastic member 30.

In some embodiments, the second buffer portion 322 includes a third segment 322a and a fourth segment 322b. The third segment 322a is connected to the base portion 31. The fourth segment 322b is connected to the third segment 322a and the second connection portion 332.

In some embodiments, an included angle formed by the third segment 322a and the base portion 31 is the same as an included angle formed by the fourth segment 322b and the second connection portion 332, which facilitates uniform stress and uniform deformation of the elastic member 30.

In some embodiments, the connection portion 33 is provided with a flange 333. The flange 333 is formed by folding a side of the connection portion 33 facing away from the buffer portion 32 in the second direction Y. Along the first direction X, the flange is disposed between the connection portion 33 and the base portion 31. The flange 333 can reduce the risk of the connection portion 33 cutting the wire harness.

In some embodiments, along the first direction X, a projection of the flange 333 does not overlap with a projection of the buffer portion 32, reducing the influence on a deformation region of the buffer portion 32.

In some embodiments, the elastic member 30 includes a third bent portion 34, and the third bent portion 34 abuts against the first bent portion 113. This is conducive to improving the connection strength between the elastic member 30 and the housing 10a.

In some embodiments, the elastic member 30 includes a fourth bent portion 35, and the fourth bent portion 35 abuts against the second bent portion 123. This is conducive to improving the connection strength between the elastic member 30 and the housing 10a and helps the elastic member 30 to push open the bottom wall 12.

In some embodiments, the battery module 100 includes a first connection end 102 and a second connection end 103. The first connection end 102 and the second connection end 103 are connected to the front cover 10b. One of the first connection end 102 and the second connection end 103 is connected to the circuit board 40, and the other is connected to the first conductive member 50. The first connection end 102 and the second connection end 103 protrude from a side of the front cover 10b to be connected to an external device, the side of the front cover 10b being a side facing away from the cell assembly 20.

Referring to FIG. 3, in some embodiments, the battery module 100 includes a sampling member 70. The sampling member 70 is connected to each cell 21. The sampling member 70 is connected to the circuit board 40 to transmit a collected electrical signal of the cell 21 to the circuit board 40. Optionally, electrode terminals 21c of adjacent cells 21 are stacked, and the sampling member 70 is connected to at least one of the stacked electrode terminals 21c. Optionally, the electrical signal includes information such as current, voltage, resistance, and temperature. The sampling member 70 and the electrode terminal 21c are connected in a welding manner, where the welding manner includes but is not limited to laser welding and ultrasonic welding.

In some embodiments, the battery module 100 includes a wire 104, and the detection member is connected to the sampling member 70 through the wire 104.

Referring to FIG. 29, this application further provides an electric device 200 using at least one of the above battery modules 100. In an embodiment, the electric device 200 of this application may be but is not limited to an electronic device, a drone, a backup power source, an electric vehicle, an electric motorcycle, an electric assisted bicycle, an electric tool, a large household storage battery module, and the like.

Those of ordinary skill in the art should understand that the above embodiments are only used to illustrate this application and are not intended to limit this application. Appropriate modifications and variations made to the foregoing embodiments without departing from the essential spirit and scope of this application all fall within the scope disclosed in this application.

## Claims

1. A battery module, comprising:
a cell assembly;
a housing, the cell assembly is disposed in the housing;
a front cover connected to the housing; and
an elastic member, the elastic member and the cell assembly are arranged along a first direction; along the first direction, one side of the elastic member is connected to the housing, and another side of the elastic member is connected to the cell assembly; wherein
the housing comprises a top wall and a bottom wall arranged along a second direction, the top wall is provided with a first extension portion, the first extension portion comprises a first extension connection portion connected to the front cover, the bottom wall is provided with a second extension portion, the second extension portion comprises a second extension connection portion connected to the front cover; and along the first direction, a length of the second extension connection portion is less than a length of the first extension connection portion; and
the first direction is perpendicular to the second direction.

2. The battery module according to claim 1, wherein the first extension portion is fixedly connected to the front cover.

3. The battery module according to claim 1 or 2, further comprising a circuit board, wherein the circuit board is disposed on the front cover;
a side of the circuit board is provided with a first component the side of the circuit board being a side facing the elastic member (30); and
along the second direction, a distance from the first component to the top wall is L1, and a distance from the first component to the bottom wall is L2, wherein L1 is less than L2.

4. The battery module according to claim 3, wherein along the second direction, a distance between the bottom wall and the top wall is L0, and L1 is less than 1/4L0.

5. The battery module according to claim 3 or 4, wherein along the first direction, the first component protrudes from the circuit board relative to other components.

6. The battery module according to any one of claims 1 to 5, wherein the first extension portion comprises a first bent portion, the first bent portion is connected to the first extension connection portion, and the elastic member abuts against the first bent portion.

7. The battery module according to claim 6, wherein the second extension portion comprises a second bent portion, the second bent portion is connected to the second extension connection portion, and the elastic member abuts against the second bent portion.

8. The battery module according to claim 6 or 7, wherein the elastic member comprises a base portion, a buffer portion, and a connection portion; the base portion is connected to the cell assembly, and the buffer portion is connected to the connection portion and the base portion; and
the connection portion is fixed to the housing.

9. The battery module according to claim 8, wherein the buffer portion comprises a first buffer portion, and the first buffer portion is connected to one side of the base portion; or
the buffer portion comprises a first buffer portion and a second buffer portion; along the second direction, the first buffer portion and the second buffer portion are disposed opposite to each other, the first buffer portion is connected to one side of the base portion, and the second buffer portion is connected to another side of the base portion.

10. The battery module according to claim 9, wherein the connection portion comprises a first connection portion; the elastic member comprises a third bent portion; and the third bent portion abuts against the first bent portion.

11. The battery module according to claim 10, wherein the connection portion comprises a second connection portion, and the first connection portion and the second connection portion are disposed opposite to each other along the second direction; and
the elastic member comprises a fourth bent portion, and the fourth bent portion abuts against the second bent portion.

12. The battery module according to claim 10 or 11, wherein the top wall is provided with a first fixing portion, and the first connection portion is fixed to the first fixing portion;
along the first direction, a projection of the first fixing portion overlaps with a projection of the first connection portion; and/or
the bottom wall is provided with a second fixing portion, and the second connection portion is fixed to the second fixing portion; and
along the first direction, a projection of the second fixing portion overlaps with a projection of the second connection portion.

13. The battery module according to claim 12, wherein the housing comprises a first side wall and a second side wall, the first side wall and the second side wall are arranged along a third direction, the first side wall is fixedly connected to the front cover, the second side wall is fixedly connected to the front cover; the first direction, the second direction, and the third direction are perpendicular to each other; and
the first side wall is provided with a third fixing portion, and the first connection portion and the second connection portion are fixed to the third fixing portion; and/or the second side wall is provided with a fourth fixing portion, and the first connection portion and the second connection portion are fixed to the fourth fixing portion.

14. The battery module according to any one of claims 1 to 13, wherein
the first extension portion and the second extension portion are disposed in the front cover.

15. The battery module according to any one of claims 1 to 14, wherein the housing comprises a rear wall; the rear wall is connected to the top wall and the bottom wall;
along the first direction, the cell assembly is disposed between the elastic member and the rear wall; and a stiffness of the elastic member is less than a stiffness of the rear wall.

16. The battery module according to claim 15, wherein the cell assembly comprises a cell unit, the cell unit comprises a cell, the cell comprises a cell housing, an electrode assembly, and an electrode terminal, the cell housing comprises a body portion, the electrode assembly is disposed in the body portion, and the electrode terminal is connected to the electrode assembly and led out from the cell housing;
the top wall is provided with two first limiting portions, the two first limiting portions are arranged along the third direction, and the body portion of each cell unit is disposed between the two first limiting portions; and/or
the bottom wall is provided with two second limiting portions, the two second limiting portions are arranged along the third direction, and the body portion of each cell unit is disposed between the two second limiting portions; and
the first direction, the second direction, and the third direction are perpendicular to each other.

17. The battery module according to any one of claims 3 to 5, wherein the first component comprises a fuse apparatus.

18. The battery module according to any one of claims 1 to 17, wherein the second extension portion is directly connected to an inner surface of the front cover.

19. A battery module, comprising:
a cell assembly;
a housing, wherein the cell assembly is disposed in the housing;
a front cover, wherein the front cover is connected to the housing; and
an elastic member, wherein the elastic member and the cell assembly are arranged along a first direction, and along the first direction, one side of the elastic member is connected to the housing, and another side is connected to the cell assembly; wherein
the housing comprises a top wall and a bottom wall arranged along a second direction, the top wall is provided with a first extension portion, the first extension portion comprises a first extension connection portion connected to the front cover, the bottom wall is provided with a second extension portion, and the second extension portion comprises a second extension connection portion connected to the front cover; and
the stiffness of the first extension portion is greater than the stiffness of the second extension portion.

20. An electric device, comprising at least one battery module according to any one of claims 1 to 19.
